Europäisches Patentamt

European Patent Office

Office européen des brevets

(19)

(11) Publication number: **0 160 531**
**B1**

# (12) EUROPEAN PATENT SPECIFICATION

(45) Date of publication of patent specification: **09.01.91**

(51) Int. Cl.⁵: **H 04 N 9/66**

(21) Application number: **85302933.8**

(22) Date of filing: **25.04.85**

(54) **Demodulator circuits for amplitude-modulated signals.**

(30) Priority: **27.04.84 JP 85733/84**

(43) Date of publication of application:
**06.11.85 Bulletin 85/45**

(45) Publication of the grant of the patent:
**09.01.91 Bulletin 91/02**

(84) Designated Contracting States:
**DE FR GB NL**

(56) References cited:
**EP-A-0 080 280**
**US-A-3 987 481**

(73) Proprietor: **SONY CORPORATION**
**7-35 Kitashinagawa 6-Chome Shinagawa-ku**
**Tokyo 141 (JP)**

(72) Inventor: **Nishimura, Yoshikazu c/o Patent**
**Division**
**Sony Corporation 7-35 Kitashinagawa-6**
**Shinagawa-ku Tokyo (JP)**
Inventor: **Yasukouchi, Yoshimi c/o Patent**
**Division**
**Sony Corporation 7-35 Kitashinagawa-6**
**Shinagawa-ku Tokyo (JP)**
Inventor: **Asakura, Hisao c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

EP 0 160 531 B1

**Description**

This invention relates to demodulator circuits for amplitude-modulated signals, for example, signals transmitted between the output of a colour video camera and a camera control unit (hereinafter referred to as a CCU).

Video signals are transmitted from the output of a video camera to a CCU over a cable, and returning video signals from the CCU are transmitted over the same cable. The luminance signal in the video signal from the video camera is amplitude-modulated onto a fixed frequency carrier wave, and the two colour difference signals are quadrature two-phase amplitude-modulated before being transmitted. At the CCU, amplitude-demodulation is effected to derive the original luminance signal and the two colour difference signals.

A previously proposed demodulator circuit for the amplitude-modulated signals operates by passing the input signal through a band-pass filter and a limiter to extract the carrier signal, and supplying it to a phase-locked loop (PLL) circuit, in which a carrier signal for use in the demodulation is generated. Such a demodulator circuit does however have defects. In particular, the phase of the output of the limiter depends on the input level, so the phase of the carrier signal for synchronous demodulation is of low accuracy, and there is a substantial risk of unstable operation prior to settlement into the locked state of the PLL circuit due to the limited loop gain of the PLL circuit.

Another previously proposed demodulator circuit which is intended for a television receiver, but which has features similar to the precharacterizing part of claim 1, is disclosed in European patent specification EP-A1-0 080 280.

According to the present invention there is provided a demodulator circuit for an amplitude-modulated signal, the circuit comprising:

an input terminal to be supplied with an amplitude-modulated input signal comprising at least a modulated carrier signal amplitude-modulated by an information signal, said modulated carrier signal having a predetermined phase;

an oscillator means for generating a first demodulating carrier the phase of which is displaced from that of said modulated carrier signal by 90°, and a second demodulating carrier which has the same phase as that of said modulated carrier signal;

a first synchronous demodulator for demodulating said input signal with said first demodulating carrier;

a second synchronous demodulator for demodulating said input signal with said second demodulating carrier;

a level detector;

a control circuit supplied with the output of said level detector; and

an output terminal connected to said second synchronous demodulator for receiving the demodulated information signal from said second synchronous demodulator;

characterized in that:

said level detector detects the level of a predetermined portion of the demodulated output of said first synchronous demodulator; and

said control circuit controls said oscillator means so that the level of said predetermined portion detected by said level detector becomes zero and accordingly the phase of said second demodulating carrier becomes synchronous with that of said modulated carrier signal.

The invention will now be described by way of example with reference to the accompanying drawings, in which:

Figure 1 shows wave spectra of a transmitted signal in an embodiment of the present invention;

Figure 2 is a block diagram of a modulator circuit;

Figures 3A and 3B show waveforms of transmitted signals in an alternative embodiment of the present invention; and

Figure 4 is a block diagram of an embodiment of demodulator circuit according to the present invention.

The invention will be described by way of example with reference to the transmission of a colour video signal from a video camera to a CCU over a camera cable.

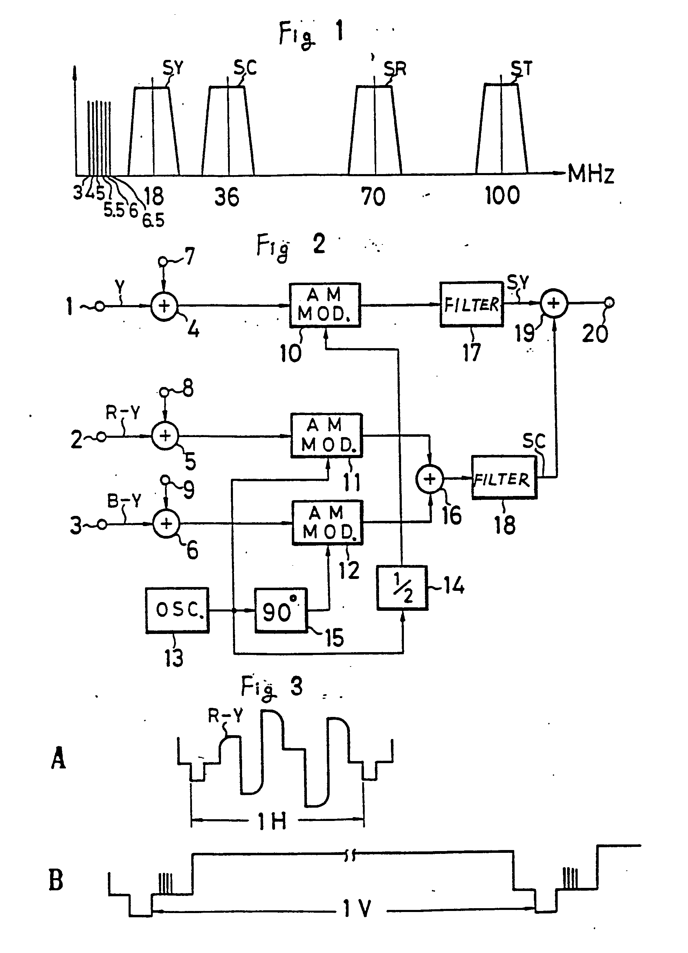

Figure 1 indicates the frequency spectra of the signals transmitted between the CCU and the video camera. From the CCU to the video camera, a return video signal (composite video signal), a video signal for a teleprompter, an intercom signal and a programme audio signal are transmitted. In Figure 1, SR represents the frequency-modulated return video signal of 70 MHz carrier frequency, and ST represents the frequency-modulated video signal of 100 MHz carrier frequency for the teleprompter. The frequency-modulated intercom signal has a carrier frequency of 3 MHz, and the frequency-modulated programme audio signal has a carrier frequency of 4 MHz. The programme audio signal is the audio signal to be broadcast.

On the other hand, from the video camera to the CCU are transmitted an amplitude-modulated luminance signal SY of 18 MHz carrier frequency, the colour difference signal SC consisting of the R-Y signal and the B-Y signal which have been quadrature two-phase amplitude modulated and have a carrier frequency of 36 MHz, frequency-modulated microphone signals for two channels having 5 MHz and 5.5 MHz carrier frequencies, respectively, a frequency-modulated intercom signal of 6 MHz carrier frequency, and a discrimination signal having a carrier frequency of 6.5 MHz.

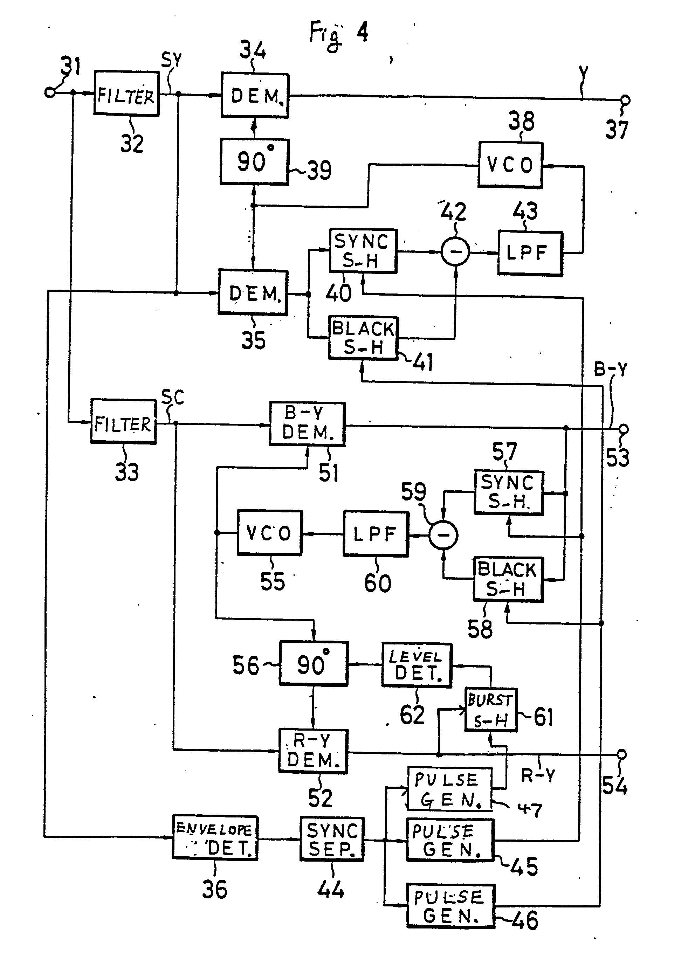

Figure 2 is a block diagram of a circuit provided in the video camera unit for generating the above-mentioned signals SY and SC. The circuit comprises an input terminal 1 for receiving luminance signals from the output of a video camera (not shown), an input terminal 2 for receiving an R-Y signal from the output of the video camera, and an input terminal 3 for receiving a B-Y signal from the output of the video camera. The input luminance, R-Y and B-Y signals are supplied to respective adders 4, 5 and 6. The adder 4 is also supplied with a synchronizing signal of the horizontal period from a terminal 7. The adder 5 is also supplied with a discrimination signal such as a synchronizing signal of the horizontal period from a terminal 8. The adder 6 is also supplied with another discrimination signal such as a burst signal from a terminal 9.

The output from the adder 4 is supplied to an amplitude-modulator 10, to which the carrier signal of 18 MHz from a 1/2 frequency divider circuit 14, which receives a 36 MHz carrier signal generated by an oscillator 13 is also fed. The output of the adder 5 is supplied to another amplitude-modulator 11, which also receives the carrier signal directly from the oscillator 13. The output of the adder 6 is supplied to another amplitude-modulator 12 which additionally receives the 90°-shifted signal from a 90° phase shifter 15 which receives the carrier signal from the oscillator 13. The outputs of the amplitude-modulators 11 and 12 are fed to another adder 16. The output of the amplitude-modulator 10 is supplied to another adder 19 through a filter 17, and the output of the adder 16 is supplied to the adder 19 through a filter 18. The filters 17 and 18 are provided for the elimination of unnecessary signals. The filter 17 supplies the amplitude-modulated luminance signals SY having a centre frequency of 18 MHz. The filter 18 supplies the quadrature two-phase amplitude modulated colour difference signals with a centre frequency of 36 MHz forming the signal SC. The output of the adder 19 is transmitted to the CCU over a camera cable through an output terminal 20. The synchronous signal to be mixed with the luminance signal and the R-Y signal may be a signal of the horizontal period or an integral multiple thereof, and is not limited to a composite synchronization signal. Figure 3A shows the waveform of a signal consisting of the R-Y signal plus a synchronous signal superimposed onto it. Additionally, a burst signal to be superimposed on to the B-Y signal is, for example, a sine wave of 4.5 MHz, which may be obtained by frequency-division of the output of the oscillator 13. As shown in Figure 3B, the burst signal is inserted during one horizontal period following every vertical period.

Figure 4 shows a block diagram of a demodulator circuit for demodulating such signals from the video camera and transmitted to the CCU over the camera cable. The demodulator circuit includes an input terminal 31 for receiving the signals which are fed to filters 32 and 33. The filter 32 derives the amplitude-modulated luminance signal SY, and the filter 33 derives the quadrature two-phase amplitude-modulated colour difference signal SC.

The amplitude-modulated luminance signal SY is fed to synchronous demodulators 34 and 35, and to an envelope detector 36. The luminance signal Y is developed at the output of the synchronous demodulator 34 and is supplied to an output terminal 37. The output signal of a voltage controlled oscillator (VCO) 38 is fed to the synchronous demodulator 35 as a carrier signal. A carrier signal is also fed from the VCO 38 to the synchronous demodulator 34 through a 90° phase shifter 39. The demodulator circuit also includes a synchronous signal sample-hold circuit 40 and a black level sample-hold circuit 41. The sample-hold circuits 40 and 41 receive the output signal of the synchronous demodulator 35, and feed their outputs to a subtraction circuit 42. The output of the subtraction circuit 42 is fed as a control signal to the VCO 38 through a low-pass filter 43.

The amplitude-modulated colour difference signal SC is supplied from the filter 33 and fed to synchronous demodulators 51 and 52. The output of the synchronous demodulator 51 is the B-Y signal and is supplied to an output terminal 53. The output of the synchronous demodulator 52 is the R-Y signal and is supplied to an output terminal 54. The output of the synchronous demodulator 51 is also fed to a synchronizing signal sample-hold circuit 57 and to a black level sample-hold circuit 58, the outputs of which are fed to another subtractor 59 for error detection. The output of the subtractor 59 is supplied as the control signal for a VCO 55 through another low-pass filter 60.

The output of the VCO 55 forms carrier signals supplied to the synchronous demodulator 51, and to the synchronous demodulator 52 through a 90° phase shifter 56. The output of the synchronous demodulator 52 is fed to a level detector 62 through another burst signal sample-hold circuit 61. The output of the level detector 62 is supplied as a phase control voltage to the 90° phase shifter 56. Sampling pulses are fed from a pulse generator 45 to the sample-hold circuits 40 and 57, from another pulse generator 46 to the sample-hold circuits 41 and 58, and from a pulse generator 47 to the sample-hold circuit 61. On the basis of the synchronizing signal separated from the output of the envelope detector 36 by a synchronizing separation circuit 44, sampling pulses for sample-holding the synchronizing signal are formed in the pulse generator 45, sampling pulses for sample-holding of the black level are formed in the pulse generator 46, and sampling pulses for sample-holding the burst signal are formed in the pulse generator 47.

The luminance signal demodulating system comprises the subtractor 42, the low-pass filter 43, the VCO 38 and the two sample-hold circuits 40 and 41, which form a PLL circuit. The VCO 38 is controlled in phase so that the level of the output of the subtraction circuit 42 is zero. In this condition, the phase of the carrier signal generated by the VCO 38 differs by 90° from the normal demodulating axis of the amplitude-modulated signal. The output signal of the VCO 38 is supplied to the synchronous demodulator 34 through a 90° phase shifter 39, so the synchronous demodulator 34 derives the luminance signal Y.

Detection of the level of the synchronizing signal is made with reference to the black level to prevent influence by the level of the video signal (APL). If there is provided a clamp circuit for bringing the black level to a fixed level, however, only the level of the synchronizing signal need be detected.

The B-Y signal demodulation system comprises the subtractor 59, the low-pass filter 60, the VCO 55 and the two sample-hold circuits 57 and 58, which form a PLL circuit. The VCO 55 is controlled so that the level of the output of the subtractor 59 is zero, that is, the level of the synchronizing signal is zero. In this condition, the phase of the carrier signal output from the VCO 55 coincides with the normal demodulating axis of the amplitude-modulated B-Y signal. That is to say, the synchronizing signal is incorporated only in the R-Y signal, and so no synchronizing signal component is developed in the output of the synchronous demodulator 51. This implies that the phase of the carrier signal from the VCO 55 coincides with the demodulating axis of the B-Y signal.

The output signal of the VCO 55 is fed through the 90° phase shifter 56 to a synchronous demodulator 52, where demodulation is carried out to form the original R-Y signal. The closed loop comprising the synchronous demodulator 52, the burst signal sample-hold circuit 61, the level detector 62 and the 90° phase shifter 56 operates so as to bring the level of the burst signal to zero, contributing to prevention of leakage of the B-Y signal into the R-Y signal.

As described above, at the output terminals 37, 53 and 54 are developed components of the colour video signal from the video camera; namely the luminance signal Y, the B-Y signal and the R-Y signal, respectively. Each signal is fed to a matrix circuit through a synchronizing signal eliminating circuit and a burst signal eliminating circuit (not shown), to be converted into primary colour signals for red, green and yellow.

The invention is not only applicable to transmission of signals between a video camera and a CCU, but also, for example, to transmission of colour video signals for cable television (CATV).

Embodiments of demodulator circuit according to the present invention can perform stable demodulation without using a limiter, and with the phase of the carrier signal for demodulation free from dependence on the level of the input signals.

**Claims**

1. A demodulator circuit for an amplitude-modulated signal, the circuit comprising:
an input terminal (31) to be supplied with an amplitude-modulated input signal comprising at least a modulated carrier signal amplitude-modulated by an information signal, said modulated carrier signal having a predetermined phase;
an oscillator means (38, 39) for generating a first demodulating carrier the phase of which is displaced from that of said modulated carrier signal by 90°, and a second demodulating carrier which has the same phase as that of said modulated carrier signal;

a first synchronous demodulator (35) for demodulating said input signal with said first demodulating carrier;
a second synchronous demodulator (34) for demodulating said input signal with said second demodulating carrier;
a level detector (40, 41, 42);
a control circuit (43, 38) supplied with the output of said level detector (40, 41, 42); and
an output terminal (37) connected to said second synchronous demodulator (34) for receiving the demodulated information signal from said second synchronous demodulator (34);
characterized in that:
said level detector (40, 41, 42) detects the level of a predetermined portion of the demodulated output of said first synchronous demodulator (35); and
said control circuit (43, 38) controls said oscillator means (38, 39) so that the level of said predetermined portion detected by said level detector (40, 41, 42) becomes zero and accordingly the phase of said second demodulating carrier becomes synchronous with that of said modulated carrier signal.

2. A demodulator circuit according to claim 1 wherein said information signal is a luminance signal and said signal comprises only said modulated carrier signal which is amplitude-modulated by said luminance signal.

3. A demodulator circuit according to claim 2 wherein said luminance signal comprises a synchronizing signal and said level detector (40, 41, 42) detects the level of said synchronizing signal from the demodulated output of said first synchronous demodulator (35).

4. A demodulator circuit according to claim 3 wherein said oscillator means (38, 39) comprises an oscillator (38) for generating one of said first and second demodulating carriers and a phase shifter (39) for shifting the phase of the output of said oscillator (38) by 90° and for generating the other of said first and second demodulating carriers.

5. A demodulator circuit according to claim 4 wherein said control circuit (43, 38) controls said oscillator (38).

6. A demodulator circuit according to claim 1 wherein said information signal is a first chrominance signal and said input signal further comprises another modulated carrier signal the phase of which is displaced from that of said modulated carrier signal by 90°, said other modulated carrier signal being amplitude-modulated by a second chrominance signal.

7. A demodulator circuit according to claim 6 wherein said first chrominance signal has a first synchronizing signal and said level detector (57, 58, 59) detects the level of said first synchronizing signal from the demodulated output of said first synchronous detector (51).

8. A demodulator circuit according to claim 7 further comprising a second level detector (61, 62) for detecting a level at the predetermined position of the demodulated output of said second synchronous demodulator (52) and a second control circuit (56) supplied with the output of said second level detector (61, 62) for controlling said oscillator means (55, 56) to adjust the phase of said second demodulating carrier.

9. A demodulator circuit according to claim 8 wherein said second chrominance signal has a second synchronizing signal and said second level detector (61, 62) detects the level of said second synchronizing signal from the demodulated output of said second synchronous demodulator (52).

10. A demodulator circuit according to claim 9 wherein said oscillator means (55, 56) comprises an oscillator (55) for generating one of said first and second demodulating carriers and a phase shifter (56) for shifting the phase of the output of said oscillator (55) by 90° to derive the other of said first and second demodulating carriers.

11. A demodulator circuit according to claim 10 wherein said control circuit (60, 55) controls said oscillator (55) while said second control circuit (56) controls said phase shifter (56) to adjust the relative phases of said first and second demodulating carriers.

12. A demodulator circuit according to claim 3 wherein said identification signal is a synchronizing signal and sample-hold circuits (40, 41) sample the level of said synchronizing signal relative to the black level.

13. A demodulator circuit according to claim 12 further comprising an envelope detector (36) to which said input signal is supplied, and pulse generators (45, 46) for developing respective sampling samples in dependence on the output of said envelope detector (36) to control said sample-hold circuits (40, 41).

**Patentansprüche**

1. Demodulatorschaltung für ein amplitudenmoduliertes Signal

mit einem Eingang (31), dem ein amplitudenmoduliertes Eingangssignal zuführbar ist, das wenigstens ein moduliertes Trägersignal enthält, das mit einem Informationssignal amplitudenmoduliert ist und eine vorbestimmte Phase hat,

mit einer Oszillatoreinrichtung (38, 39) zur Erzeugung eines ersten Demodulationsträgers mit gegenüber dem modulierten Trägersignal um 90° verschobener Phase und eines zweiten Demodulationsträgers, der mit dem modulierten Trägersignal in Phase ist,

mit einem ersten Synchrondemodulator (35) zum Demodulieren des Eingangssignals mit dem ersten Demodulationsträger,

mit einem zweiten Synchrondemodulator (34) zum Demodulieren des Eingangssignals mit dem zweiten Demodulationsträger,

mit einem Pegeldetektor (40, 41, 42),

mit einer mit dem Ausgangssignal des Pegeldetektors (40, 41, 42) beaufschlagten Steuerschaltung (43, 38),

sowie mit einem mit dem zweiten Synchrondemodulator (34) verbundenen Ausgang (34), der das demodulierte Informationssignal von dem zweiten Synchrondemodulator (34) aufnimmt,

dadurch gekennzeichnet,

daß der Pegeldetektor (40, 41, 42) den Pegel eines vorbestimmten Abschnitts des demodulierten Ausgangssignals des ersten Synchrondemodulators (35) detektiert, und

daß die Steuerschaltung (43, 38) die Oszillatoreinrichtung (38, 39) so regelt, daß der Pegel des von dem Pegeldetektor (40, 41, 42) detektierten vorbestimmten Abschnitts zu Null wird und dementsprechend die Phase des zweiten Demodulationsträgers mit der Phase des modulierten Trägersignals synchronisiert wird.

2. Demodulatorschaltung nach Anspruch 1, bei der das Informationssignal ein Luminanzsignal ist und das genannte Eingangssignal nur das modulierte Trägersignal enthält, das mit dem Luminanz-Signal amplitudenmoduliert ist.

3. Demodulatorschaltung nach Anspruch 2, bei der das Luminanzsignal ein Synchronisiersignal enthält und bei der der Pegeldetektor (40, 41, 42) den Pegel des Synchronisiersignals aus dem demodulierten Ausgangssignal des ersten Synchrondemodulators (35) detektiert.

4. Demodulatorschaltung nach Anspruch 3, bei der die Oszillatoreinrichtung (38, 39) einen Oszillator (38) zur Erzeugung entweder des ersten oder des zweiten Demodulationsträgers aufweist sowie einen Phasenschieber (39) zur Verschiebung der Phase des Ausgangssignals des Oszillators (38) um 90° zur Bildung des jeweils anderen Demodulationsträgers.

5. Demodulatorschaltung nach Anspruch 4, bei der die Steuerschaltung (43, 38) den Oszillator (38) steuert.

6. Demodulatorschaltung nach Anspruch 1, bei der das Informationssignal ein erstes Chrominanzsignal ist und bei dem das Eingangssignal ferner ein weiteres moduliertes Trägersignal enthält, das mit einem zweiten Chrominanzsignal amplitudenmoduliert ist und dessen Phase gegenüber der Phase des modulierten Trägersignals um 90° verschoben ist.

7. Demodulatorschaltung nach Anspruch 6, bei der das erste Chrominanzsignal ein erstes Synchronisiersignal enthält und bei der der Pegeldetektor (57, 58, 59) den Pegel des ersten Synchronisiersignals aus dem demodulierten Ausgangssignal des ersten Synchrondemodulators (41) detektiert.

8. Demodulatorschaltung nach Anspruch 7, mit einem zweiten Pegeldetektor (61, 42) zur Detektierung des Pegels an einer vorbestimmten Stelle des demodulierten Ausgangssignals des zweiten Synchrondemodulators (52) sowie mit einer mit dem Ausgangssignal des zweiten Pegeldetektors (61, 62) beaufschlagten zweiten Steuerschaltung (56) für die Steuerung der Oszillatoreinrichtung (55, 56) zur Regelung der Phase des zweiten Demodulationsträgers.

9. Demodulatorschaltung nach Anspruch 8, bei der das zweite Chrominanzsignal ein zweites Synchronisiersignal enthält und bei der der zweite Pegeldetektor (61, 62) den Pegel des zweiten Synchronisiersignals aus dem demodulierten Ausgangssignal des zweiten Synchrondemodulators (52) detektiert.

10. Demodulatorschaltung nach Anspruch 9, bei der die Oszillatoreinrichtung (55, 56) einen Oszillator (55) zur Erzeugung entweder des ersten oder des zweiten Demodulationsträgers aufweist sowie einen Phasenschieber (56) zur Verschiebung der Phase des Ausgangssignals des Oszillators (55) um 90° zur Bildung des jeweils anderen Demodulationsträgers.

11. Demodulatorschaltung nach Anspruch 10, bei der die Steuerschaltung (60, 55) den Oszillator (55) steuert, während die zweite Steuerschaltung (56) den Phasenschieber (56) so steuert, daß die relative Phasen des ersten und des zweiten Demodulationsträgers geregelt werden.

12. Demodulatorschaltung nach Anspruch 3, bei der das Identifizier-Signal ein Synchronisiersignal ist und bei der Abtast- und Halteschaltungen (40, 41) den Pegel des Synchronisiersignals relativ zu dem Schwarzpegel abtasten.

13. Demodulatorschaltung nach Anspruch 12 mit einem Hüllkurven-Detektor (36), dem das Eingangssignal zugeführt wird, sowie mit Impulsgeneratoren (45, 46) zur Gewinnung entsprechender Abtastproben in Abhängigkeit von dem Ausgangssignal des Hüllkurven-Detektors (36) für die Steuerung der Abtast- und Halteschaltungen (40, 41).

## Revendications

1. Circuit démodulateur pour signal modulé en amplitude, le circuit comprenant:

une borne d'entrée (31) pour recevoir un signal d'entrée modulé en amplitude comprenant au moins un signal porteur modulé, modulé en amplitude par un signal d'information, le signal porteur modulé ayant une phase prédéterminée;

un moyen oscillateur (38, 39) pour engendrer une première onde porteuse de démodulation dont la phase est décalée de celle du signal porteur modulé de 90°, et une deuxième onde porteuse de démodulation qui a la même phase que celle du signal porteur modulé;

un premier démodulateur synchrone (35) pour démoduler le signal d'entrée avec la première onde porteuse de démodulation;

un deuxième démodulateur synchrone (34) pour démoduler le signal d'entrée avec la deuxième onde porteuse de démodulation;

un détecteur de niveau (40, 41, 42);

un circuit de commande (43, 38) recevant le signal de sortie du détecteur de niveau (40, 41, 42); et

une borne de sortie (37) connectée au deuxième démodulateur synchrone (34) pour recevoir le signal d'information démodulé du deuxième démodulateur synchrone (34);

caractérisé en ce que:

le détecteur de niveau (40, 41, 42) détecte le niveau d'une partie prédéterminée du signal démodulé de sortie du premier démodulateur synchrone (35); et

le circuit de commande (43, 38) commande le moyen oscillateur (38, 39) de telle sorte que le niveau de la partie prédéterminée détectée par le détecteur de niveau (40, 41, 42) devient nul et qu'en conséquence la phase de la deuxième onde porteuse de démodulation devient synchrone avec celle du signal porteur modulé.

2. Circuit démodulateur selon la revendication 1, dans lequel le signal d'information est un signal de luminance et ce signal ne comprend que le signal porteur modulé qui est modulé en amplitude par le signal de luminance.

3. Circuit démodulateur selon la revendication 2, dans lequel le signal de luminance comprend un signal de synchronisation et le détecteur de niveau (40, 41, 42) détecte le niveau du signal de synchronisation provenant du signal démodulé de sortie du premier démodulateur synchrone (35).

4. Circuit démodulateur selon la revendication 3, dans lequel le moyen oscillateur (38, 39) comprend un oscillateur (38) pour engendrer une des première et deuxième ondes porteuses de démodulation et un déphaseur (39) pour déphaser le signal de sortie de l'oscillateur (38) de 90° et pour engendrer l'autre des première et deuxième ondes porteuses de démodulation.

5. Circuit démodulateur selon la revendication 4, dans lequel le circuit de commande (43, 38) commande l'oscillateur (38).

6. Circuit démodulateur selon la revendication 1, dans lequel le signal d'information est un premier signal de chrominance et le signal d'entrée comprend en outre un autre signal porteur modulé dont la phase est décalée de celle du signal porteur modulé de 90°, l'autre signal porteur modulé étant modulé en amplitude par un deuxième signal de chrominance.

7. Circuit démodulateur selon la revendication 6, dans lequel le premier signal de chrominance comporte un premier signal de synchronisation et le détecteur de niveau (57, 58, 59) détecte le niveau du premier signal de synchronisation provenant du signal démodulé de sortie du premier détecteur synchrone (51).

8. Circuit démodulateur selon la revendication 7, comprenant en outre un deuxième détecteur de niveau (61, 62) pour détecter un niveau à la position prédéterminée du signal démodulé de sortie du deuxième démodulateur synchrone (52) et un deuxième circuit de commande (56) recevant le signal de sortie du deuxième détecteur de niveau (61, 62) pour commander le moyen oscillateur (55, 56) afin de régler la phase de la deuxième onde porteuse de démodulation.

9. Circuit démodulateur selon la revendication 8, dans lequel le deuxième signal de chrominance comporte un deuxième signal de synchronisation et le deuxième détecteur de niveau (61, 62) détecte le niveau du deuxième signal de synchronisation provenant du signal démodulé de sortie du deuxième démodulateur synchrone (52).

10. Circuit démodulateur selon la revendication 9, dans lequel le moyen oscillateur (55, 56) comprend un oscillateur (55) pour engendrer une des première et deuxième ondes porteuses de démodulation et un déphaseur (56) pour décaler la phase du signal de sortie de l'oscillateur (55) de 90° afin de dériver l'autre des première et deuxième ondes porteuses de démodulation.

11. Circuit démodulateur selon la revendication 10, dans lequel le circuit de commande (60, 55) commande l'oscillateur (55) alors que le deuxième circuit de commande (56) commande le déphaseur (56) pour régler les phases relatives des première et deuxième ondes porteuses de démodulation.

12. Circuit démodulateur selon la revendication 3, dans lequel le signal d'identification est un signal de synchronisation et les circuits d'échantillonnage et de maintien (40, 41) échantillonnent le niveau du signal de synchronisation par rapport au niveau de noir.

13. Circuit démodulateur selon la revendication 12, comprenant en outre un détecteur d'enveloppe (36) auquel est fourni le signal d'entrée, et des générateur d'impulsions (45, 46) pour produire des échantillons d'échantillonnage respectifs en fonction du signal de sortie du détecteur d'enveloppe (36) afin de commander les circuits d'échantillonnage et de maintien (40, 41).

Fig. 1

Fig. 2

Fig. 3

Fig 4